# EUROPÄISCHE PATENTSCHRIFT

(11) **EP 1 117 572 B1**
(45) Veröffentlichungstag und Bekanntmachung des Hinweises auf die Patenterteilung: **09.10.2002**
(21) Anmeldenummer: 00925023.4
(22) Anmeldetag: 25.05.2000
(51) Int. Cl.: B60R 25/10, G08B 13/14, G08B 25/10

(54) **SICHERHEITSANLAGE MIT MOBILTELEFON**
SECURITY SYSTEM WITH A MOBILE TELEPHONE
SYSTEME DE SECURITE ASSOCIE A UN TELEPHONE MOBILE

(30) Priorität: 03.06.1999 CH 104299
(43) Veröffentlichungstag der Anmeldung: 25.07.2001
(73) Patentinhaber: Gharb, Samy, 8045 Zürich (CH)
(72) Erfinder: Gharb, Samy, 8045 Zürich (CH)
(86) Internationale Anmeldenummer: CH0000294
(87) Internationale Veröffentlichungsnummer: WO00074983

(56) Entgegenhaltungen:
- EP-A- 0 242 099
- DE-A- 19 508 684
- GB-A- 2 270 405
- US-A- 5 497 149

## Beschreibung

Die Erfindung betrifft eine Sicherheitsanlage mit Mobiltelefon zur Überwachung von Objekten, insbesondere von Fahrzeugen und Sicherheitskoffern, und ein Verfahren zum Betrieb einer derartigen Anlage gemäss Patentanspruch 8.

Eine Anlage gemäß dem Oberbegriff von Anspruch 1 ist dem Fachmann allgemein bekannt, z.B. US 5,497,149. Der Überwachung, bzw. der Sicherung von Objekten, insbesondere von Fahrzeugen und Sicherheitskoffern wird heute eine zunehmende Bedeutung zugeschrieben.
Zur Sicherung von Fahrzeugen sind verschiedene Sicherheitsanlagen bekannt, z.B. Alarmanlagen mit einer automatischen Alarmauslösung, bei der ein starkes Hornsignal vernehmbar wird, wenn Unbefugte sich Zugang zum Fahrzeug beschaffen. Gelingt dem Unbefugten aber, die Alarmanlage etwa zu desaktivieren, kann das Fahrzeug entwendet werden, wobei sich das Wiederauffinden vielfach als unlösbares Problem darstellt.

Es ist die Aufgabe der vorliegenden Erfindung, eine Sicherheitsanlage vorzuschlagen, bei der die Alarmmeldung über eine Mobiltelefon-Verbindung erfolgt.
Eine weitere Aufgabe besteht darin, ein Verfahren zum Betrieb einer derartigen Anlage anzugeben, bei dem ein Satellitennavigationssystem zur Lokalisierung des Fahrzeuges miteinbezogen wird.

Erfindungsgemäss wird diese Aufgabe mit einer Anlage gemäss dem Wortlaut nach Patentanspruch 1 gelöst, und durch ein Verfahren zum Betrieb derselben gemäss dem Wortlaut nach Patentanspruch 6.

Die Erfindung wird im Folgenden anhand der Zeichnung näher erläutert. Es zeigen:
- Fig. 1: Schematische Darstellung einer Sicherheitsanlage mit Mobiltelefon
- Fig. 2: Übersichtsschaltplan der SPS-Steuerung D
- Fig. 3: Übersichtsschaltplan der SPS-Steuerung F
- Fig. 4: Übersichtsschaltplan der SPS-Steuerung G
- Fig. 5: Übersichtsschaltplan der SPS-Steuerung H
- Fig. 6: Übersichtsschaltplan der SPS-Steuerung I
- Fig. 7: Sicherheitsanlage mit Mobiltelefon integriert in ein Satellitenortungssystem
- Fig. 8: Sicherheitsanlage mit Mobiltelefon integriert in einen Sicherheitskoffer

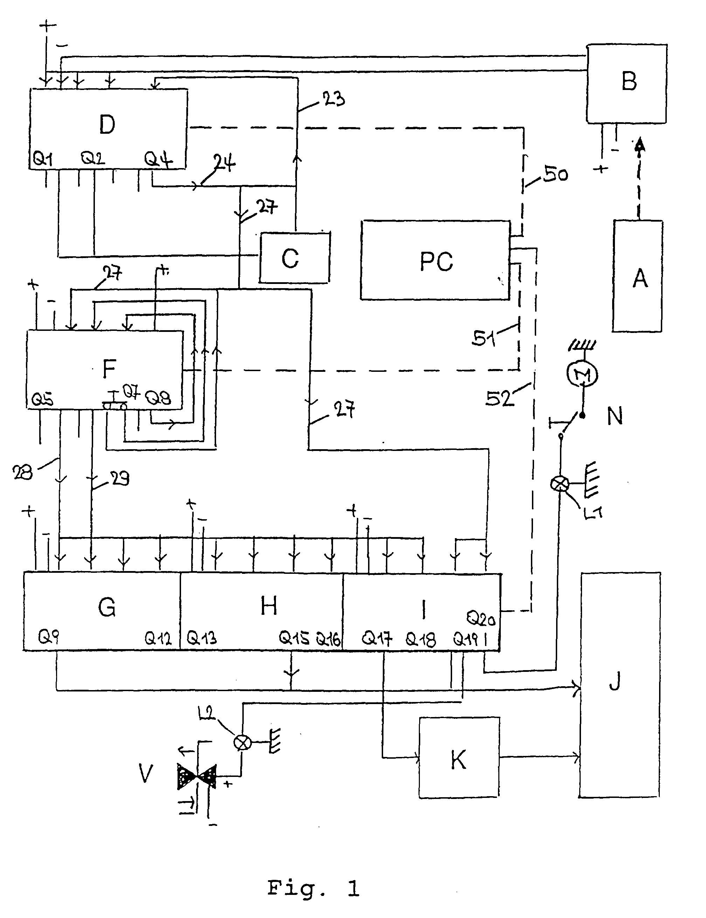

Fig. 1 zeigt eine schematische Darstellung einer Sicherheitsanlage mit Mobiltelefon, bzw. Natel.
Ein Hauptrelais B liegt eingangsseitig an der 12 V-Stromversorgung eines Fahrzeuges während die Ausgänge mit einer ersten SPS-Steuerung D verbunden sind, diese speisen und Ausgänge Q1 - Q4 aufweist. Das Hauptrelais B wird mittels einer Fernbedienung A bekannter Art über eine Infrarot-Schnittstelle angesteuert und wird nicht näher beschrieben.
Die SPS-Steuerung D dient im wesentlichen den Start der Alarmfunktionen auszulösen. Zur Alarmdetektion sind einer oder mehrere Sensoren zu einer Sensoreinheit C zusammengefasst. Als Sensoren sind hierzu bekannte Annäherungssensoren (IR-Sensoren) vorgesehen, die im Fahrzeug derart angeordnet sind, dass sie auf eine Türöffnung, bzw. eine Fensteröffnung ein Ausgangssignal als Alarmsignal zu liefern imstande sind. In der Regel ist pro Türe ein Sensor dieser Art vorgesehen. In Fig. 1 ist lediglich ein einziger Sensor angeordnet, um an Übersichtlichkeit zu gewinnen. Wenn mehrere Sensoren vorliegen werden die Ausgänge parallel geschaltet.
Der Ausgang Q1 ist mit der Sensoreinheit. C verbunden und liefert das Startsignal für die Betriebsbereitschaft der Sensoren.
Der Ausgang Q2 ist ebenfalls mit der Sensoreinheit C verbunden und liefert das Startsignal für die Betriebsbereitschaft der Sensoren in der Nacht, was über einen Timer erfolgt und später beschrieben wird.
Mit den Ausgängen Q1 und Q2 werden die Zeitfenster für die Betriebsbereitschaft bei Tag und Nacht einzeln frei gewählt, wodurch sich eine hohe Flexibilität ergibt und im Hinblick auf einen sparsamen Betrieb der Anlage von grosser Bedeutung ist.

Die Sensoreinheit C ist über Leitungen 23 und 24 mit der SPS-Steuerung D verbunden, d.h. die Sensoren die Sensoren werden dadurch in bestimmten Zeitfenstern aktiv oder passiv gehalten.
Die Leitung 23 führt das Startalarmsignal der oder des Sensors der Sensoreinheit C während 30 s. Die Leitung 24, die den Ausgang Q4 verbindet mit der Sensoreinheit, führt den Befehl Alarmsignal während 6 h, sodass in diesem Zeitfenster ein Alarmsignal aktiv geführt werden kann.

Am Ausgang Q4 steht das Alarmsignal an, das über Leitungen 24 und 27 einer zweiten SPS-Steuerung F und einer fünften SPS-Steuerung I gleichzeitig zugeführt wird.

Die SPS-Steuerung F mit den Ausgängen Q5 - Q8 dient im wesentlichen der Alarmwiederholung, bzw. der Wiederholung des Alarmsignals. Wenn wegen einer besetzten Mobiltelefonverbindung die Alarminformation nicht übermittelt werden kann, erfolgen eine oder mehrere automatische Wiederholungen derselben. Die Ausgänge Q5 und Q6 sind z.B. für eine erste und eine zweite Wiederholung vorgesehen, wobei die entsprechenden Ausgänge über Leitungen 28 und 29 mit einer dritten SPS-Steuerung G verbunden sind, die die Ausgänge Q9 - Q12 aufweist.

Die Leitungen 28 und 29 werden gleichzeitig einer zur SPS-Steuerung G parallel angeordneten vierten SPS-Steuerung H mit den Ausgängen Q13 - Q16 und einer fünften SPS-Steuerung I mit den Ausgängen Q17 - Q20 verbunden.

Die Ausgänge Q7 und Q8 liefern die Startsignale für die Wiederholung, bzw. die Unterdrückung einer Wiederholung, nämlich Q7 für das Alarmsignal Nr. 2 bei Tag und Q8 für die Unterdrückung des Alarmsignals Nr. 2 bei Nacht.

Die SPS-Steuerungen G, H und I dienen im wesentlichen der Aktivierung eines Mobiltelefons J und eines digitalen Aufzeichnungsgerätes K sowie einiger weiteren Funktionen, die das Fahrzeug betreffen, nämlich Zündung und Benzinpumpe.

Die Ausgänge Q9 bis Q16 liefern die 4 für den Start des Mobiltelefons notwendigen Informationen, nämlich am Ausgang Q9 den Befehl 'Mobiltelefon ON', am Ausgang Q10 den Befehl '1 - Code', am Ausgang Q11 den Befehl '2 - Code', am Ausgang Q12 den Befehl '3 - OK' und am Ausgang Q15 der Befehl '4 - Notrufnummer'.

Der Ausgang Q17 ist mit dem digitalen Aufzeichnungsgerät K verbunden, in dem der Notruftext gespeichert ist, abgerufen und dem Mobiltelefon J zugeführt werden kann. Der Ausgang Q18 führt den Befehl 'Mobiltelefon OFF'.

Die Ausgänge Q19, resp. Q20 dienen im Alarmfall der Unterbrechung der Stromzuführung zur Benzinpumpe V, resp. zur Zündung N, wobei die in den entsprechenden Stromkreisen angeordneten Anzeigelämpchen L2 (rot) und L1 (grün) erlöschen.
Selbstverständlich werden auch die SPS-Steuerungen F, G, H und I, das Mobiltelefon J und das Aufzeichnungsgerät K über die gleiche 12 V-Stromversorgung gespiesen, was nur teilweise angedeutet ist.

Alle Komponenten der Sicherheitsanlage, bis auf die Fernbedienung, sind im Fahrzeug an einer unauffälligen, kaum einsehbaren Stelle untergebracht.
Spricht in einem Alarmfall mindestens einer der Sensoren an, so wird Stromzuführung zur Benzinpumpe und Zündung unterbrochen, im Mobiltelefon wird die Notrufnummer gewählt und der Nottext wird übermittelt. Falls die Leitung besetzt ist, wird die Alarminformation ein oder mehrere Male wiederholt, und zwar in freiwählbaren Abständen, z.B. in einem 2-Minutenabstand.

Im weiteren zeigt Fig. 1 einen Rechner PC, der mit mobilen Leitungen 50, 51 und 52 mit den SPS-Steuerungen D, F und G, H, I verbunden ist. Über diese Leitungen werden alle notwendigen Informationen für die Programmierung der SPS-Steuerungen aus dem PC (Datenbank) ausgelesen und danach wird das PC-System von der Sicherheitsanlage getrennt. Auf diese Weise wird die Sicherheitsanlage bei der Inbetriebnahme programmiert, wobei die Kundenwünsche in einfachster Weise berücksichtigt werden können.

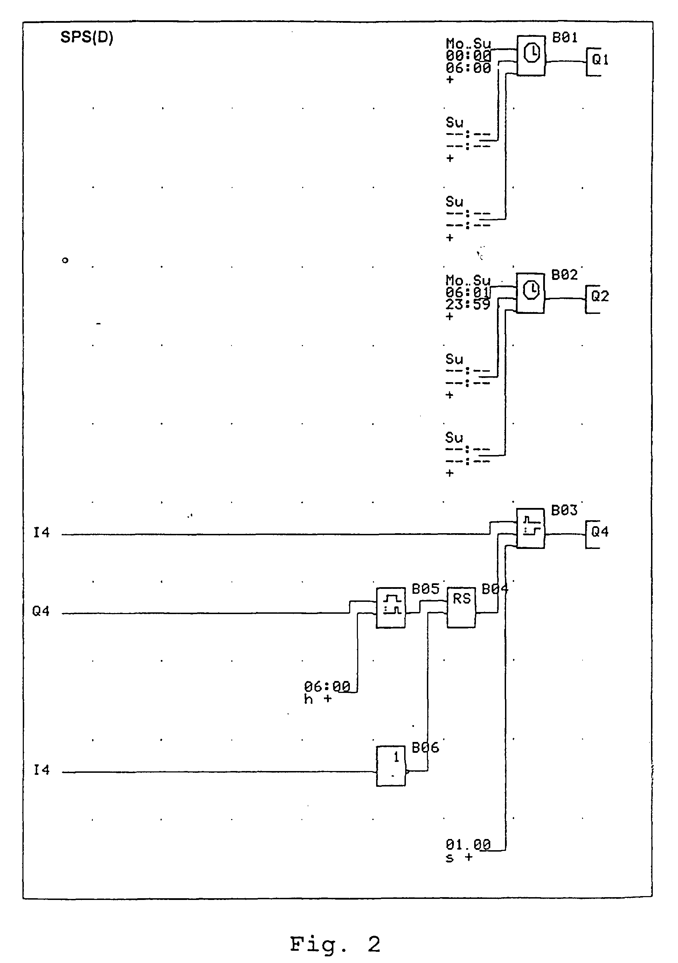

Fig. 2 zeigt den Übersichtsschaltplan der SPS-Steuerung D. Eine erste Timer-Funktion B01, bzw. der Block Nr. B01, definiert ein Zeitfenster von 00.00 bis 06.00, in welchem der Ausgang Q1 auf 'HIGH' steht. Analog steht bei einer zweiten Timer-Funktion B02 in einem Zeitfenster von 06.01 bis 23.59 der Ausgang Q2 auf 'HIGH'. Die Blöcke Nr. B03 bis B06 enthalten Schaltfunktionen für das Ein- und Ausschalten.

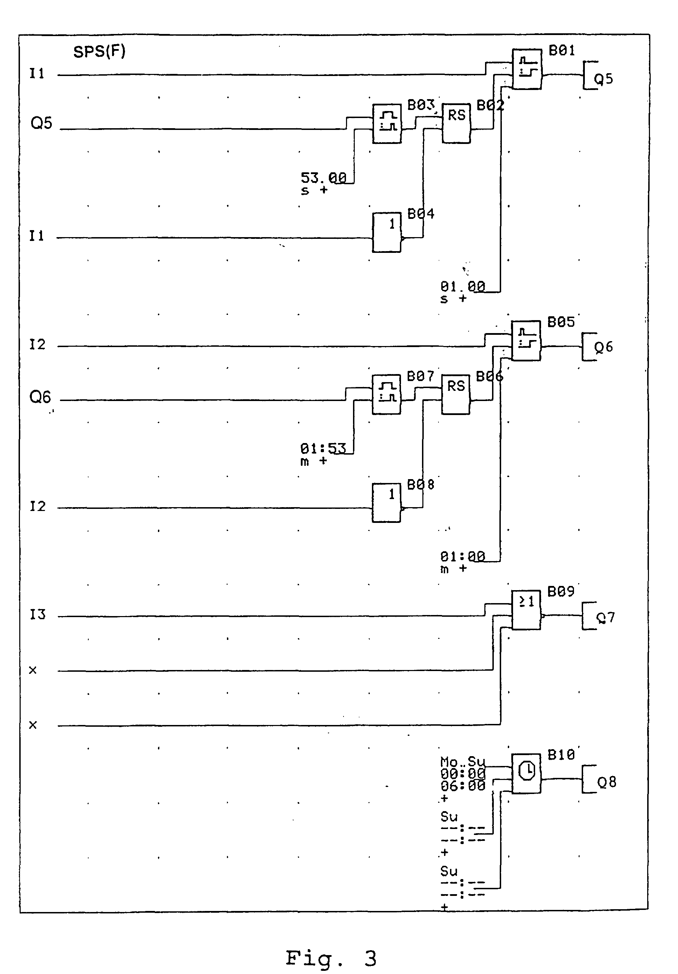

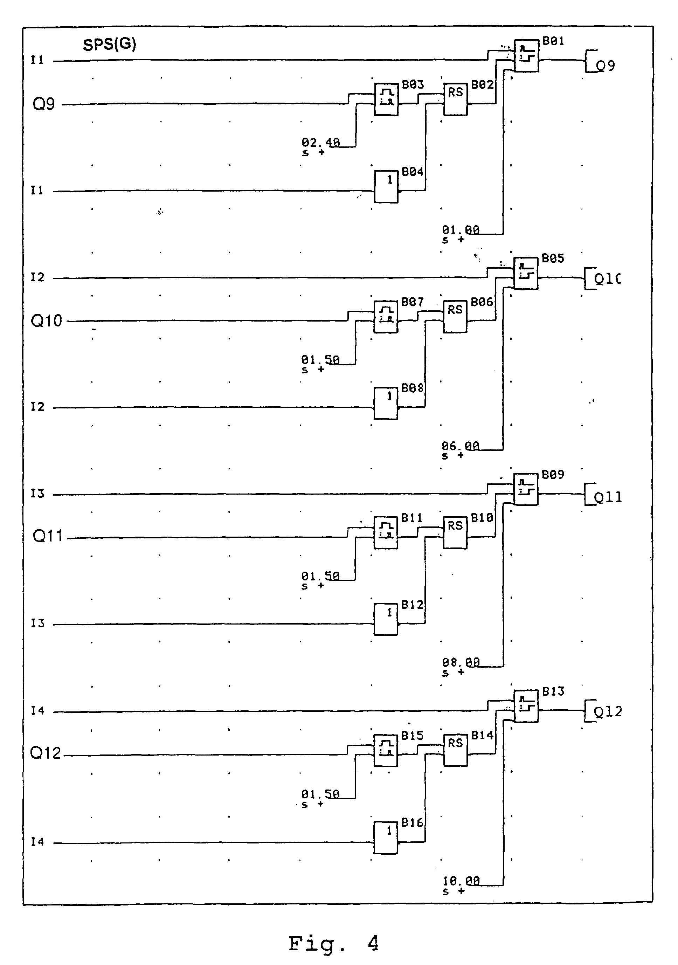

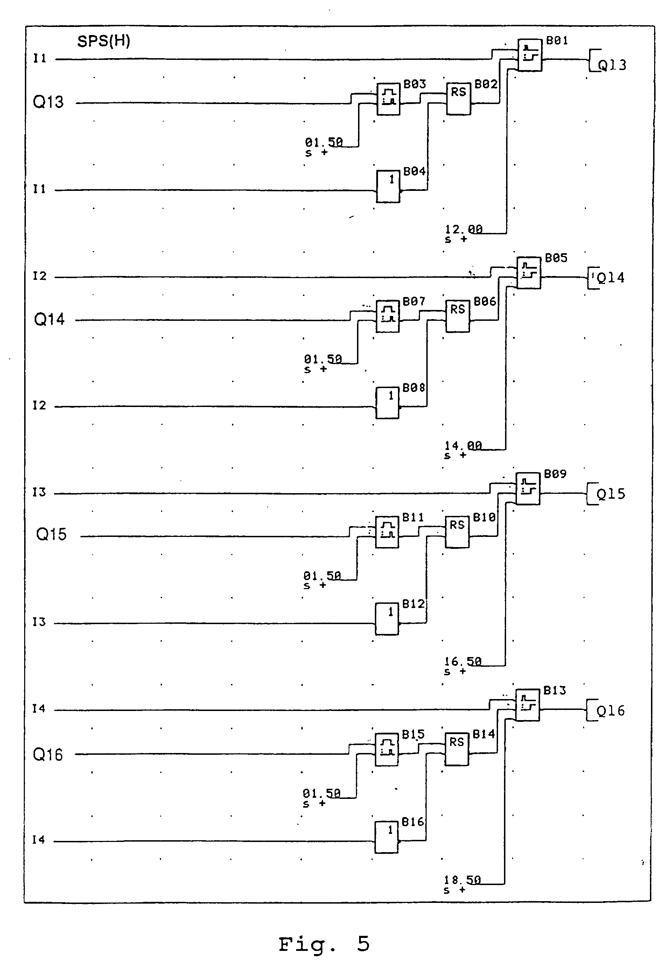

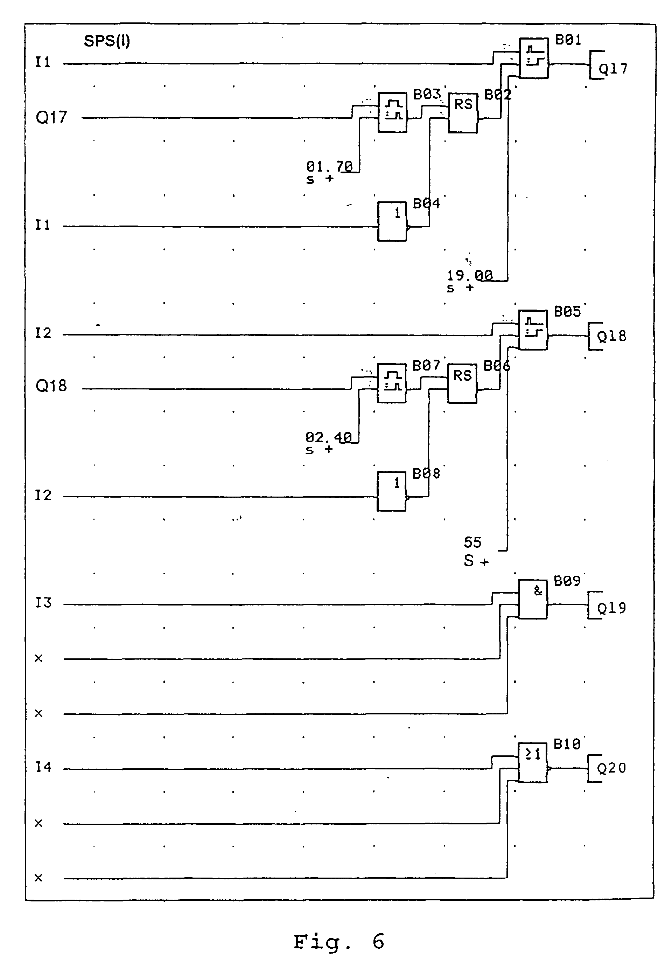

Fig. 3 - 6 zeigen die Übersichtsschaltpläne der SPS-Steuerungen F, G, H und I. Sie enthalten analog zu den in Fig. 2 bereits beschriebenen bekannte Funktionen wie Zeitfunktionen und Ein/Ausschaltfunktionen (Relais) und werden nicht näher beschrieben.

In einem Ausführungsbeispiel, das im Aufbau der Fig. 1 entspricht und als Sicherheitsanlage für ein Fahrzeug vorgesehen ist, werden als Steuereinheiten 5 SPS-Steuerungen, ein Mobiltelefon und ein digitales Aufzeichnungsgerät verwendet.

Die Steuer-Funktionen sind in der nachstehenden Tabelle zusammengefasst:

| SPS | Relais Nr. | Befehl | Zeit |
|---|---|---|---|
| D | Q1 | Anlage ON/OFF bei Nacht | 00.00 H - 05.59 H |
| D | Q2 | Anlage ON/OFF bei Tag | 06.00 H - 11.59 H |
| D | Q3 | Reic | ----------------- |
| D | Q4 | Alarmsignal für 6 h | 01.00 s - 06.00 H |
| F | Q5 | Alarmsignal Nr. 1 | 01.00 s - 53.00 s |
| F | Q6 | Alarmsignal Nr. 2 | 01.00 m - 01.53 m |
| F | Q7 | Alarmsignal Nr. 2 ON/OFF | ----------------- |
| | | (NOR-Schaltung) | |
| F | Q8 | Kein Alarmsignal Nr. 2 | 00.00 H - 05.59 H |
| G | Q9 | Mobiltelefon ON | 01.00 s - 02.40 s |
| G | Q10 | Pin Code 1 | 06.00 s - 01.50 s |
| G | Q11 | Pin Code 2 | 08.00 s - 01.50 s |
| G | Q12 | Pin Code 3 | 10.00 s - 01.50 s |
| H | Q13 | Pin Code 4 | 12.50 s - 01.50 s |
| H | Q14 | OK | 14.00 s - 01.50 s |
| H | Q15 | Notrufnummer | 16.50 s - 01.50 s |
| H | Q16 | OK | 18.50 s - 01.50 s |
| I | Q17 | Start Notruftext | 19.90 s - 01.70 s |
| I | Q18 | Mobiltelefon OFF | 55.50 s - 02.50 s |
| I | Q19 | Magnetventil ON (UND-Schaltung) | ------------------ |
| I | Q20 | Zündung OFF | ------------------ |
| | | (NOR-Schaltung) | |

Eine Anwendung der erfindungsgemässen Sicherheitsanlage mit Mobiltelefon findet sich zur Ortung von Fahrzeugen über ein Satellitenortungs-system. Ein bekanntes System dieser Art wird von Eutelsat unter dem Namen 'EUTELTRACKS-SYSTEM' angeboten und erlaubt die Position von Fahrzeugen mit einer Genauigkeit von 100 Metern zu ermitteln (Ref. QTRACS/400 Systemsoftware für AS/400 Rechnersysteme von IBM).

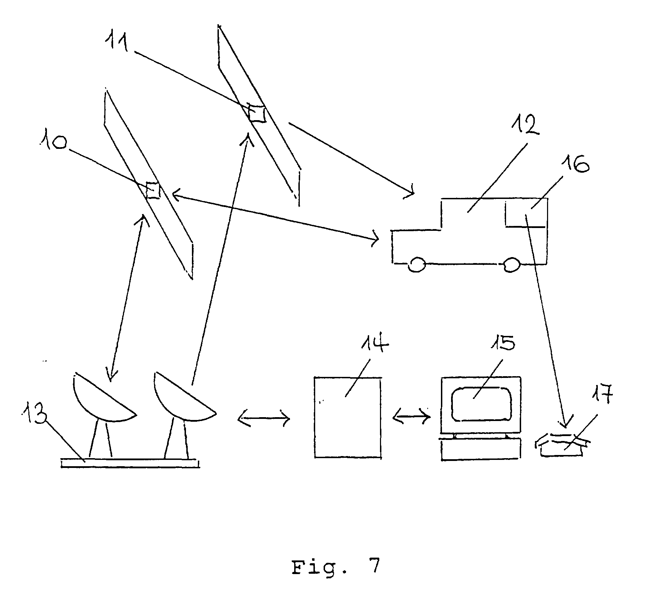

Fig. 7 zeigt die Sicherheitsanlage mit Mobiltelefon integriert in ein Satellitenortungssystem.
Unter der Bezeichnung EUTELTRACS ist ein System für mobile Satellitenkommunikation für Fahrzeuge bekannt. Zwei geostationäre EUTEL-Satelliten, nämlich ein Nachrichtensatellit 10 und ein Positionssatellit 11, mit einer Bedeckung von ganz West- und Osteuropa, dem Mittelmeerbereich und dem mittleren Osten, senden und empfangen kontinuierlich die von den Mobilgeräten 12 und der Bodenstation 13 an den jeweiligen Empfänger gerichtete Nachrichten. Dabei werden die Positionen der Fahrzeuge mit einer Genauigkeit von 100 Metern ermittelt. Die Bodenstation steht mit einem Diensteanbieter 14 in Verbindung, der alle Nachrichten und Positionsmeldungen über terrestrische Netze oder Satellitennetze zum Endkunden leitet. Dieser verfügt über einen Dispo-PC 15, d.h. einen Rechner mit Bildschirm, auf dem eine Positionsdarstellung möglich ist. Dieses EUTELTRACS System wird hier nicht näher beschrieben.
Erfindungsgemäss wird die Sicherheitsanlage 16 mit Mobiltelefon nun in das Mobilgerät 12 eingebaut, das in der Regel ein Strassenfahrzeug ist, aber beispielsweise auch eine Motorjacht sein kann.
Trifft nun der Alarmfall ein, so wird via Mobiltelefon der Endkunde über das Telefon 17 alarmiert. Er schaltet seinen PC 15 ein, wählt die Positionsdarstellung und kann die Verfolgung einleiten.
Damit ergibt sich die Möglichkeit, ein entwendetes Fahrzeug nach erfolgtem Alarm über den Diensteanbieter auf dem Bildschirm eines PC's, z.B. im Strassennetz einer Grossstadt, zu orten und zu verfolgen.

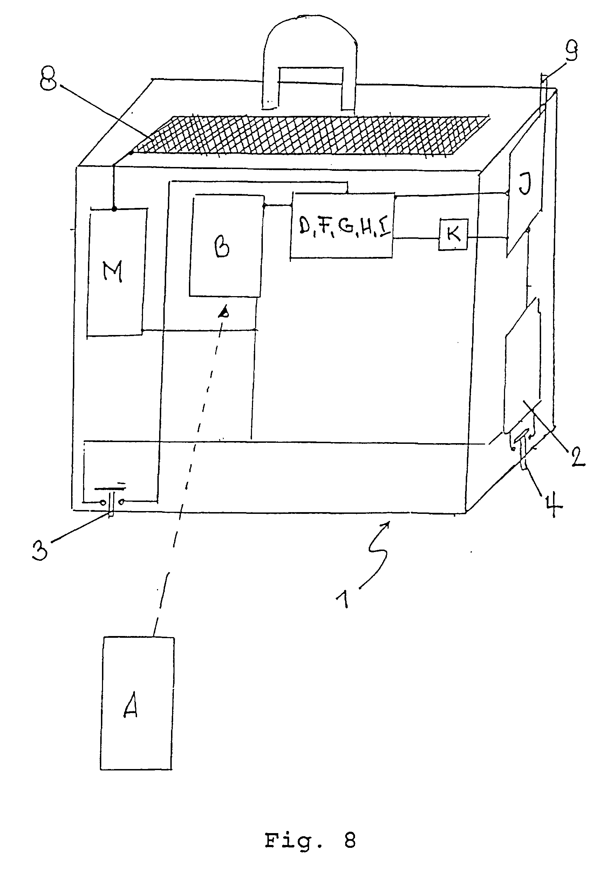

Fig. 8 zeigt eine Sicherheitsanlage mit Mobiltelefon integriert in einen Sicherheitskoffer für die Überwachung in einem Satellitenortungssystem.
Eingebaut in einen Sicherheitskoffer 1 sind die bereits in Fig. 1 beschriebenen Komponenten der Sicherheitsanlage wie das Hauptrelais B, die SPS-Steuerungen D, F, G, H, I, das Aufzeichnungsgerät K und das Mobiltelefon J. Eine Stromversorgung 2 ist einerseits mit dem Mobiltelefon, dem Hauptrelais und einem Satellitenkommunikationsgerät M und andererseits mit den SPS-Steuerungen über ein Schaltelement 3 verbunden. Das Schaltelement ist auf der Unterseite des Sicherheitskoffers unauffällig angebracht und ist als Schalter derart ausgebildet, dass der Kontakt geschlossen wird, wenn der Sicherheitskoffer vom Boden aufgegriffen wird. Ebenfalls auf der Unterseite des Sicherheitskoffers befindet sich ein weiteres Schaltelement 4, das mit der Stromversorgung in Verbindung steht und diese beim Aufgreifen in Betrieb setzt, wodurch die ganze Sicherheitsanlage gestartet wird. Aus Redundanzgründen können auch mehrere Schaltelemente 3 und 4 vorgesehen werden. Aktiviert wird der Sicherheitskoffer mittels einer Fernbedienung A. Alle Komponenten sind in einer Kofferwand, im Kofferdeckel oder im Kofferboden in einer flachen Bauweise integriert, dass im Koffer selbst genügend Platz für Dokumente oder ähnliche Dinge bleibt.
Vom Satellitenkommunikationsgerät M führt ein Antennenkabel zur Antenne 8, die für den Empfang der Satellitensignale vorgesehen ist. Die ist unter dem Kofferdeckel angebracht und von aussen nicht erkennbar. Ebenfalls kaum erkennbar ist eine kurze Antenne 9 des Mobiltelefons J, die beispielsweise in ein Kantenelement des Koffers eingearbeitet wird. Über das Satellitenkommunikationsgerät M und mittels der bereits erwähnten Systemsoftware QTRACKS/400 wird der Standort des Koffers auf einem AS/400-Rechnersystem von IBM ständig überwacht (Positionsdarstellung).

Damit ist eine zentrale Voraussetzung für das Wiederauffinden eines Sicherheitskoffers gegeben.

## Patentansprüche

1. Sicherheitsanlage zur Überwachung von Objekten, umfassend Sensoren, mehrere Steuereinheiten (G, H, I), ein digitales Aufzeichnungsgerät mit gespeichertem Notruftext und ein Mobiltelefon (J) mit vorgewählten Notrufnummern, **dadurch gekennzeichnet, dass** als Steuereinheit eine erste SPS-Steuerung (D) für die Initialisierung der Überwachung, eine zweite SPS-Steuerung (F) für die Wiederholung eines Alarmsignales und drei weitere SPS-Steuerungen (G, H, I) für die Aktivierung des Mobiltelefons (J), des digitalen Aufzeichnungsgerätes (K) und weiterer Funktionen vorgesehen sind, dass eine Sensoreinheit (C) mit mindestens einem Sensor zur Erzeugung eines Alarmzustandes mit der ersten SPS-Steuerung (D) verbunden ist, wobei für die Ansteuerung der letzteren ein Hauptrelais (B) angeordnet ist, das mittels einer Fernsteuerung (A) betreibbar ist, dass ein Rechner (PC) mit mobilen Leitungen (50, 51, 52), die zu den SPS-Steuerungen führen, zu deren Programmierung vorgesehen ist, und dass als Alarminformation ein Datensatz zur Übermittlung mit dem Mobiltelefon vorliegt.

2. Sicherheitsanlage nach Anspruch 1, **dadurch gekennzeichnet, dass** der Datensatz aus einem Startsignal, mindestens einer Notrufnummer, und mindestens einem Notruftext besteht, wobei die Notrufnummer im Mobiltelefon und der Notruftext im digitalen Aufzeichnungsgerät gespeichert vorliegt.

3. Sicherheitsanlage nach Anspruch 1 oder 2, **dadurch gekennzeichnet, dass** Ausgänge der ersten SPS-Steuerung (D) mit einem Eingang der zweiten SPS-Steuerung (F) und einer fünften SPS-Steuerung (I) in Verbindung stehen, während Ausgänge der zweiten SPS-Steuerung (F) mit Eingängen der dritten, vierten und fünften SPS-Steuerungen (G, H, I) in Verbindung stehen, dass Ausgänge der dritten und vierten SPS-Steuerungen (G, H) mit einem Eingang des Mobiltelefons (J) und Ausgänge der fünften SPS-Steuerung (I) mit dem Aufzeichnungsgerät (K) und mit den weiteren Funktionen in Verbindung stehen.

4. Sicherheitsanlage nach Anspruch 3, **dadurch gekennzeichnet, dass** die weiteren Funktionen die Zündung (N) und das Magnetventil (V) der Benzinpumpe eines Fahrzeuges sind.

5. Verwendung der Sicherheitsanlage nach einem der Ansprüche 1 - 4, **dadurch gekennzeichnet, dass** sie sich in einem Sicherheitskoffer (1) befindet, der auf der Unterseite mindestens ein Schaltelement (3) zur Auslösung des Alarmes und ein Schaltelement (4) zur Freigabe der Stromversorgung (2) vorsieht, dass ein Satellitenkommunikationsgerät (M) mit der Sicherheitsanlage verbunden ist, das sich ebenfalls im Sicherheitskoffer befindet, das eine Antenne (8) zur Kommunikation mit einem Satellitenortungssystem aufweist und dass die Sicherheitsanlage der Ortung von Sicherheitskoffern dient.

6. Verfahren zum Betrieb einer Sicherheitsanlage nach einem der Ansprüche 1 - 4, **dadurch gekennzeichnet, dass** das Alarmsignal und die Alarminformationen in den SPS-Steuerungen (D, F, G, H, I), im Mobiltelefon (J) und im digitalen Aufzeichnungsgerät (K) programmiert, bzw. eingegeben werden, wodurch ein Datensatz festgelegt wird, dass der Betriebszustand über das Hauptrelais (B) mittels der Fernsteuerung (A) aktiviert wird, dass über mindestens einen Sensor der Sensoreinheit (C) ein Alarmsignal erzeugt und der ersten SPS-Steuerung (D) und von dieser der zweiten SPS-Steuerung (F) zugeführt wird, dass das Alarmsignal mindestens einmal den weiteren SPS-Steuerungen (G, H, I) zugeführt wird, mit deren Ausgängen das Mobiltelefon (J), das Aufzeichnungsgerät (K) und weitere Funktionen angesteuert werden, und dass die Übertragung des Datensatzes über das Mobiltelefon erfolgt, wobei der Datensatz aus der im Mobiltelefon gespeicherten mindestens einen Notrufnummer, aus dem im Aufzeichnungsgerät gespeicherten Notruftext und aus den Start- und Initialisierungssignalen aus den dritten und vierten SPS-Steuerungen zusammengefügt wird.

7. Verfahren nach Anspruch 6, **dadurch gekennzeichnet, dass** als weitere Funktionen in einem Fahrzeug die Stromführung der Zündung unterbrochen und das Magnetventil für die Benzinpumpe gesperrt wird.

8. Verfahren nach Anspruch 6 oder 7, **dadurch gekennzeichnet, dass** das Alarmsignal in der zweiten SPS-Steuerung (F) mindestens einmal zur Wiederholung gelangt, falls die vom Mobiltelefon im Alarmfall angewählte Leitung besetzt ist.

9. Verfahren nach einem der Ansprüche 6 - 8, **dadurch gekennzeichnet, dass** die Speisung der Sicherheitsanlage über die 12 V-Stromversorgung des Fahrzeuges erfolgt, mit Ausnahme der Fernsteuerung, die extern und mittels einer Batterie betrieben wird.

## Claims

1. Security system for monitoring objects, comprising sensors, several control units, a digital recording device with stored emergency message, and a mobile telephone with preselected emergency numbers, **characterized in that** as a control unit a first PLC controller (D) for initializing the monitoring, a second PLC controller (F) for repeating an alarm signal, and three additional PLC controllers (G. H, I) for activating a mobile telephone (J), a digital recording device (K), and other functions are provided; that a sensor unit (C) with at least one sensor for generating an alarm state is connected to the first PLC controller (D), whereby a main relay (B) for controlling this first PLC controller and which can be operated by a remote control (A) is provided; that a computer (PC) with mobile lines (50, 51, 52) leading to PLC controllers is provided for programming the latter; and that a data set for transmission to the mobile telephone is present as alarm information.

2. Security system as claimed in Claim 1, **characterized in that** the data set consists of a start signal, at least one emergency number, and at least one emergency message, whereby the emergency number is stored in the mobile telephone and the emergency message in the digital recording device.

3. Security system as claimed in Claim 1 or 2, **characterized in that** outputs of the first PLC controller (D) are connected to an input of the second PLC controller (F) and a fifth PLC controller (I), while outputs of the second PLC controller (F) are connected to inputs of the third, fourth, and fifth PLC controllers (G, H, I); that outputs of the third and fourth PLC controllers (G, H) are connected to an input of the mobile telephone (J), and outputs of the fifth PLC controller (I) are connected to the recording device (K) and other functions.

4. Security system as claimed in one of Claims 1 - 3, **characterized in that** the additional functions are the ignition (N) and the solenoid (V) of the fuel pump of a vehicle.

5. Use of the security system as claimed in one of Claims 1 - 4, **characterized in that** it is located inside a security case (1) that is provided on the underside with at least one switching element (3) for triggering the alarm and one switching element (4) for releasing the power supply (2); that a satellite communications device (M) that is also located in the security case is connected to the security system and has an antenna (8) for communicating with a satellite locating system; and that the security system is used for locating security cases.

6. Method for operating a security system as claimed in one of Claims 1 - 4, **characterized in that** the alarm signal and the alarm information in the PLC controllers (D, F, G, H, I) are programmed or entered into the mobile telephone (J) and digital recording device (K), which establishes a data set; that the operating status is activated via the main relay (B) by means of the remote control (A); that an alarm signal is generated via at least one sensor of the sensor unit (C) and is transmitted to the first PLC controller (D), and from this first PLC controller to the second PLC controller (F); that the alarm signal is transmitted at least once to the other PLC controllers (G, H, I), whose outputs are used to control the mobile telephone (J), the recording device (K), and other functions; and that the data set is transmitted via the mobile telephone, the data set being compiled from the at least one emergency number stored in the mobile telephone, the emergency message stored in the recording device, and the start and initialization signals from the third and fourth PLC controllers.

7. Method as claimed in Claim 6, **characterized in that** as additional functions in a vehicle the power supply of the ignition is interrupted and the solenoid for the fuel pump is blocked.

8. Method as claimed in Claim 6 or 7, **characterized in that** the alarm signal in the second PLC controller (F) is repeated at least once if the line dialed in case of an alarm by the mobile telephone is busy.

9. Method as claimed in one of Claims 6 - 8, **characterized in that** the security system is supplied via the 12 V vehicle power supply, except for the remote control that is operated externally and with a battery.

## Revendications

1. Le système de sécurité pour le maniement d'objets, comprenant des diodes, plusieurs unités de contrôle, une machine d'enrégistrement digital ayant un message d'alarme enrégistré, un téléphone mobile ayant des numéros présélectionnés, se **caractérise par le fait que** la composante (D) pour l'initialisation du maniement, une deuxième composante (F) pour la répétition d'un signal d'alarme, une trois composantes supplémentaires (G,H,I) pour l'activation d'un téléphone mobile (J), d'une machine d'enrégistrement digital (K) et d'autres fonctions sont mis à disposition; l'ordinateur avec les lignes mobiles (50,51,52) conduisant aux composantes est fourni pour la programmation de ces dernières; l'ensemble de données pour la transmission vers le téléphone mobile existe en tant que message d'alarme.

2. Le système de sécurité tel que décrit dans l'allégation 1 se **caractérise par le fait que** l'ensemble de données consiste en un signal de démarrage, d'au moins un numéro d'urgence et d'au moins un message d'alarme, considérant que le numéro d'urgence est enrégistré dans le téléphone mobile et le message est enrégistré dans la machine d'enrégistrement digital.

3. Le système de sécurité tel que décrit dans l'allégation 1 ou 2 se **caractérise par le fait que** les sorties de la première composante (D) sont connectées à une entrée de la seconde composante (F) et d'une cinquième composante (I), tandis que les sorties de la deuxième composante sont connectées aux entrées de la troisième, de la quatrième et de la cinquième composante (G,H,I); les sorties de la troisième et de la quatrième composante (G,H) sont connectées à une entrée du téléphone mobile (J) et les sorties de la cinquième composante (I) sont connectées à la machine d'enrégistrement digital et à d'autres fonctions.

4. Le système de sécurité tel que décrit dans les allégations 1 - 3 se **caractérise par le fait que** le système de démarrage (N) et la solénoide (V) de la pompe à huile sont des fonctions supplémentaires.

5. L'usage du système de sécurité tel que décrit dans l'une des allégations 1 - 4 se **caractérise par le fait que** le système se trouve dans uns boîte de sécurité (1) situé du côté bas et ayant au moins un commutateur (3) pour le déclenchement de l'alarme et un commutateur (4) pour faire passer le courant (2); un engin de communication par satellite (M) placé aussi dans la boîte de sécurité est connecté au système de sécurité et a une antenne (8) pour communiquer avec le système de localisation par satellite; le système de sécurité est utilisé pour la localisation des boîtes de sécurité.

6. La méthode pour le maniement du système de sécurité telle que décrite dans l'une des allégations 1 - 4 se **caractérise par le fait que** le signal d'alarme et le message d'alarme dans les composantes (D,F,G,H,I) sont programmés ou introduits dans le téléphone mobile (J) et dans la machine d'enrégistrement digital (K) qui produit un ensemble de données; l'état opérationnel est activé à partir du relais (B) par le biais d'une unité de contrôle en attente (A); un signal d'alarme est produit à partir d'une diode située dans l'unité de diode (C) et est transmis à la première composante (D), et à partir de cette première composante vers la deuxième composante (F); le signal d'alarme est transmis au moins une fois à d'autres composantes (G,H,I) dont les sorties sont utilisées pour contrôler le téléphone mobile (J), la machine d'enrégistrement digital (K) et d'autres fonctions; l'ensemble de données est transmis par le biais du téléphone mobile, l'ensemble de données étant produit à partir d'au moins un numéro d'urgence enrégistré dans le téléphone mobile, le message d'alarme enrégistré dans la machine d'enrégistrement digital, et les signaux pour le démarrage et l'initialisation provenant de la troisième et la quatrième composantes.

7. La méthode telle que décrite dans l'allégation 6 se **caractérise par le fait que** l'interruption de l'alimentation électrique pour le système de démarrage et le blocage de la solénoide de la pompe à huile constituent des fonctions supplémentaires.

8. La méthode telle que décrite dans l'allégation 6 ou 7 se **caractérise par le fait que** le signal d'alarme dans la deuxième composante (F) est répété au moins une fois si la ligne choisie par le téléphone en cas d'alarme est occupée.

9. La méthode telle que décrite dans l'une des allégations 6 - 8 se **caractérise par le fait que** le système de sécurité est alimenté par un courant de 12 V à partir du véhicule, sauf l'unité de contrôle en attente qui est manié de l'extérieur avec une batterie.
